# EUROPEAN PATENT APPLICATION

(11) **EP 4 794 388 A1**
(43) Date of publication of application: **19.08.2026**
(21) Application number: 24876710.5
(22) Date of filing: 12.10.2024
(51) Int. Cl.: H04W 36/00

(54) **CELL HANDOVER CONTROL METHOD AND APPARATUS, AND ELECTRONIC DEVICE**

(30) Priority: 13.10.2023 CN 202311323920
(71) Applicant: Vivo Mobile Communication Co., Ltd., Dongguan, Guangdong 523863 (CN)
(72) Inventor: LIU, Xu, Dongguan, Guangdong 523863 (CN); LUO, Gang, Dongguan, Guangdong 523863 (CN)
(74) Representative: Conti, Marco
(86) International application number: PCT/CN2024/124574
(87) International publication number: WO 2025/077905

(57) **Abstract**

This application discloses a cell handover control method and apparatus, and an electronic device, and belongs to the field of communication technologies. The method of this application includes: performing, when inter-system measurement is started, measurement on an inter-system cell adjacent to a serving cell to obtain a first measurement result; reporting, when the first measurement result satisfies a reporting condition of a target event, a measurement report corresponding to the target event to a network device, and obtaining frequency point information; receiving a first handover request message transmitted by the network device, where the first handover request message includes a target cell identifier, and a first cell corresponding to the target cell identifier is different from a cell corresponding to the target event; and determining a second cell based on the frequency point information, or the frequency point information and a frequency point corresponding to the first cell when the first cell is not found, and handing over to the second cell; or, keeping performing a service on the serving cell when the first cell is not found, where signal strength of the serving cell is greater than a preset threshold.

## Description

### CROSS-REFERENCE TO RELATED APPLICATION

This application claims priority to Chinese Patent Application No. 202311323920.2, entitled "CELL HANDOVER CONTROL METHOD AND APPARATUS, AND ELECTRONIC DEVICE", filed on October 13, 2023, which is incorporated herein by reference in its entirety.

### TECHNICAL FIELD

This application belongs to the field of communication technologies, and specifically relates to a cell handover control method and apparatus, and an electronic device.

### BACKGROUND

New radio (New Radio, NR) is a current 5th generation mobile communication technology (5th Generation Mobile Communication Technology, 5G). Long-term evolution (Long-Term Evolution, LTE) is a previous generation 4G technology. At present, circuit switched (Circuit Switched, CS) networks (2G and 3G) are decommissioned to build more 4G and 5G networks. 4G and 5G are used in combination to create a better communication experience for users.

After a terminal that supports 5G is camped on a 5G network, if the terminal moves to a coverage edge of the 5G network, a 5G signal becomes weak, and a suitable communication experience cannot be provided for user equipment (UE). In this case, the network will hand over or redirect the UE to a 4G network, to continue to provide a suitable communication experience for the UE in the 4G network. However, in an existing inter-system network handover process, the terminal communicates while connected to a poor-quality 4G or 5G cell. As a result, the user communication experience is poor.

### SUMMARY

Embodiments of this application aim to provide a cell handover control method and apparatus, and an electronic device, to solve a problem of low communication quality and a poor user communication experience that are caused by handover to a weak-signal cell between different networks.

In a first aspect, an embodiment of this application provides a cell handover control method, applied to an electronic device and including:
performing, when inter-system measurement is started, measurement on an inter-system cell adjacent to a serving cell to obtain a first measurement result, where the serving cell is a cell on which the electronic device is currently camped;
reporting, when the first measurement result satisfies a reporting condition of a target event, a measurement report corresponding to the target event to a network device, and obtaining frequency point information, where the target event is an inter-system handover trigger event, and the frequency point information includes frequency points corresponding to at least part of inter-system cells associated with the inter-system measurement;
receiving a first handover request message transmitted by the network device, where the first handover request message includes a target cell identifier, and a first cell corresponding to the target cell identifier is different from a cell corresponding to the target event; and
determining a second cell based on the frequency point information, or the frequency point information and a frequency point corresponding to the first cell when the first cell is not found, and handing over to the second cell; or
keeping performing a service on the serving cell when the first cell is not found, where signal strength of the serving cell is greater than a preset threshold.

In a second aspect, an embodiment of this application provides a cell handover control apparatus, including:
a measurement module configured to perform, when inter-system measurement is started, measurement on an inter-system cell adjacent to a serving cell to obtain a first measurement result, where the serving cell is a cell on which an electronic device is currently camped;
a first processing module configured to report, when the first measurement result satisfies a reporting condition of a target event, a measurement report corresponding to the target event to a network device, and obtain frequency point information, where the target event is an inter-system handover trigger event, and the frequency point information includes frequency points corresponding to at least part of inter-system cells associated with the inter-system measurement;
a first receiving module configured to receive a first handover request message transmitted by the network device, where the first handover request message includes a target cell identifier, and a first cell corresponding to the target cell identifier is different from a cell corresponding to the target event; and
a first control module configured to: determine a second cell based on the frequency point information, or the frequency point information and a frequency point corresponding to the first cell when the first cell is not found, and hand over to the second cell; or
a second control module configured to keep performing a service on the serving cell when the first cell is not found, where signal strength of the serving cell is greater than a preset threshold.

In a third aspect, an embodiment of this application provides an electronic device. The electronic device includes a processor and a memory, where the memory stores a program or an instruction executable on the processor, and the program or the instruction, when executed by the processor, implements the steps of the cell handover control method as described in the first aspect.

In a fourth aspect, an embodiment of this application provides a readable storage medium, having a program or an instruction stored therein, where the program or the instruction, when executed by a processor, implements the steps of the cell handover control method as described in the first aspect.

In a fifth aspect, an embodiment of this application provides a chip, including a processor and a communication interface, where the communication interface is coupled to the processor, and the processor is configured to execute a program or an instruction, to implement the steps of the cell handover control method as described in the first aspect.

In a sixth aspect, an embodiment of this application provides a computer program product, where the program product is stored in a storage medium, and the program product is executed by at least one processor, to implement the cell handover control method as described in the first aspect.

In the embodiments of this application, when inter-system measurement is started, an inter-system cell adjacent to a serving cell is measured; when an obtained first measurement result satisfies a reporting condition of a target event, a measurement report corresponding to the target event is reported to a network device, and frequency point information is obtained, where the serving cell is a cell on which an electronic device is currently camped, the target event is an inter-system handover trigger event, and the frequency point information includes frequency points corresponding to at least part of inter-system cells associated with the inter-system measurement; and later, the network device informs the electronic device to be handed over to a cell different from a cell corresponding to the target event. In one aspect, a second cell with a best or suitable signal is determined based on the frequency point information or the frequency point information and a frequency point corresponding to the first cell when the first cell is not found, and the second cell is handed over to. In another aspect, a service is kept being executed on the serving cell when the first cell is not found, where signal strength of the serving cell is greater than a preset threshold. In this way, communication quality can be ensured, and a user communication experience can be enhanced.

### BRIEF DESCRIPTION OF THE DRAWINGS

FIG. 1 is a schematic flowchart of a cell handover control method according to an embodiment of this application;
FIG. 2 is a diagram of modules of a cell handover control apparatus according to an embodiment of this application;
FIG. 3 is a diagram of a structure of an electronic device according to an embodiment of this application; and
FIG. 4 is a diagram of a hardware structure of an electronic device according to an embodiment of this application.

### DETAILED DESCRIPTION

The following clearly describes the technical solutions in the embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application shall fall within the protection scope of this application.

In the specification and the claims of this application, the terms "first" and "second" are used to distinguish similar objects, but are not used to describe a specific sequence or order. It should be understood that data used in this way are interchangeable in proper circumstances, so that the embodiments of this application can be implemented in another sequence other than those illustrated or described herein. In addition, the objects distinguished by "first" and "second" generally belong to the same category and a number of the objects is not limited. For example, there may be one or more first objects.

Existing specific steps about handover are as follows:
1) After a terminal is camped on a 5G serving cell, a network device may configure an A1 measurement event (reported when a signal of a serving cell is greater than a threshold) and an A2 measurement event (reported when the signal of the serving cell is less than the threshold).
2) When the terminal moves to an edge of the 5G cell, if the terminal detects that the signal of the serving cell is less than an A2 reporting threshold, the terminal reports the A2 measurement event.
3) The network device configures a B measurement event (a B1 or B2 measurement event with a 4G threshold, and a 4G cell is reported if the threshold is satisfied) for the terminal.
4) The terminal performs measurement on a frequency point of the 4G cell, and evaluates, based on a measurement result, whether the B event measurement is satisfied. If the B event measurement is satisfied, the terminal reports a measurement report corresponding to the B measurement event, and the measurement report carries the 4G cell (cell 1).
5) In a normal network, the network device may hand over the terminal to the cell 1 corresponding to the B measurement event, and then the terminal may access cell 1. If a signal of cell 1 is good, the terminal has good communication quality in long time evolution (LTE) (scenario 1). If a signal of cell 1 is not good, the terminal has poor communication quality in the LTE (scenario 2).
6) In an abnormal network, a fault may occur during handover of the network device, and the network device may blindly hand over the terminal to a cell 2 corresponding to a non-B event. If the cell 2 exists truly, and a signal of cell 2 is good, the terminal has good communication quality in the LTE (scenario 3). If the cell 2 exists truly, but the signal is not good, the terminal has poor communication quality in the LTE (scenario 4). If the cell 2 does not exist truly, and a UE cannot find cell 2, the terminal may re-establish a radio resource control (RRC) link on a source cell (that is, a 5G serving cell), and has poor communication quality on the source cell (scenario 5).

Scenarios 1, 2, 3, 4, and 5 are all usually found in existing networks. Scenarios 1 and 2 are normal procedures, and scenario 2 corresponds to a poor user communication experience. Scenarios 3, 4, and 5 are abnormal network procedures, and scenarios 4 and 5 correspond to a poor user communication experience.

To solve the above problems, this application provides a cell handover control method and apparatus, and an electronic device. A cell handover control method according to the embodiments of this application is described in detail below with reference to the accompany drawings through specific embodiments and application scenarios thereof.

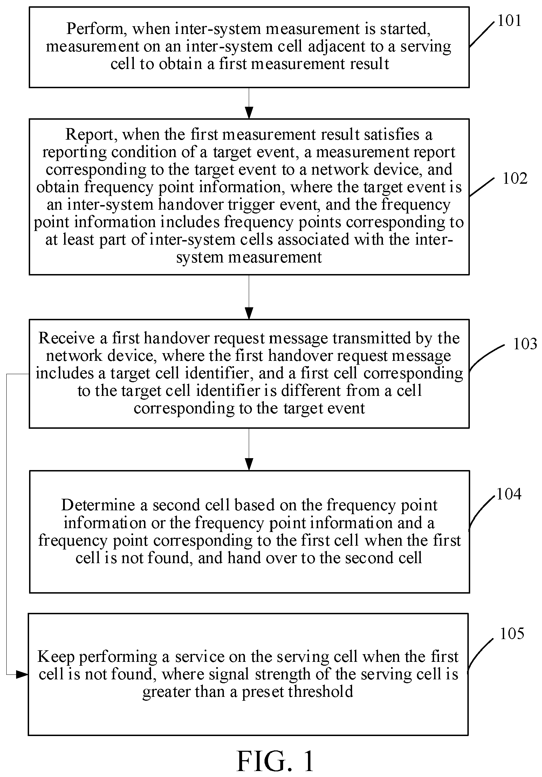

As shown in FIG. 1, an embodiment of this application provides a cell handover control method, applied to an electronic device. The method may specifically include:
Step 101: Perform, when inter-system measurement is started, measurement on an inter-system cell adjacent to a serving cell to obtain a first measurement result, where the serving cell is a cell on which the electronic device is currently camped.

Here, the electronic device starts the inter-system measurement by reporting a preset event. For example, in a 5G system, the preset event is an A2 measurement event. A reporting condition of the A2 measurement event is that a serving cell is less than a threshold. The 5G system is used as an example:

First, after the electronic device is camped on a 5G serving cell, the electronic device receives configuration information for an A1 measurement event and configuration information for an A2 measurement event that are transmitted by a network device.

The configuration information for the A1 measurement event includes a threshold (which is a preset value) and a reporting condition of the A1 measurement event. Specifically, the reporting condition of the A1 measurement event is that the serving cell is greater than the threshold, that is, signal strength of the serving cell is greater than the threshold. The configuration information for the A2 measurement event includes a threshold (which is a preset value) and a reporting condition of the A2 measurement event. Specifically, the reporting condition of the A2 measurement event is that the serving cell is less than the threshold, that is, signal strength of the serving cell is less than the threshold.

Later, when the electronic device detects that the signal strength of the serving cell is less than an A2 reporting threshold, the electronic device reports a measurement report corresponding to the A2 measurement event. In this case, the inter-system measurement is started.

Certainly, the electronic device may alternatively be camped on a 3G serving cell, a 4G serving cell, or a 6G serving cell, and be handed over to another inter-system cell when an inter-system handover trigger event is satisfied. Details are not described herein again.

Here, before the performing measurement on the inter-system cell adjacent to the serving cell, the method of this application may further include:
receiving first configuration information transmitted by the network device for a target event, where the first configuration information includes a reporting condition of the target event.

That is, the network device configures the target event for the electronic device in advance. Here, the first configuration information may further include measurement configuration information, and the measurement configuration information may include a reporting threshold.

Step 102: Report, when the first measurement result satisfies a reporting condition of a target event, a measurement report corresponding to the target event to a network device, and obtain frequency point information, where the target event is an inter-system handover trigger event, and the frequency point information includes frequency points corresponding to at least part of inter-system cells associated with the inter-system measurement.

Here, the inter-system cell associated with the inter-system measurement refers to an inter-system cell adjacent to the serving cell.

It should be noted that the reporting condition of the target event may be obtained by using the configuration information transmitted by the network device. The frequency point information may be cached in a form of a list. The list may be referred to as a cached frequency point list.

Optionally, when inter-system network handover is handover from a 5G network to a 4G network, the target event is a B measurement event, including a B1 measurement event or a B2 measurement event, and the inter-system cell is a 4G cell.

Step 103: Receive a first handover request message transmitted by the network device, where the first handover request message includes a target cell identifier, and a first cell corresponding to the target cell identifier is different from a cell corresponding to the target event.

It should be noted that when receiving a measurement report corresponding to the B measurement event reported by the electronic device, the network device triggers handover based on the measurement report. If a fault occurs in a process that the network side prepares to hand over to a cell having a relatively good signal in the measurement report, causing handover signaling transmitted to the electronic device to be blind handover, it indicates that a first cell to be handed over to of the electronic device is a non-B event cell.

Step 104: Determine a second cell based on the frequency point information, or the frequency point information and a frequency point corresponding to the first cell when the first cell is not found, and hand over to the second cell.

Here, that the first cell is not found indicates that the first cell is not a true cell. Since the frequency point information records frequency points corresponding to inter-system cells associated with the inter-system measurement previously, the electronic device may determine, by searching for the frequency points in the frequency point information, or by searching for the frequency points in the frequency point information and the frequency point corresponding to the first cell, a second cell having a best or suitable signal, and then be handed over to the second cell, thereby ensuring the communication quality and enhancing the user communication experience.

### Alternatively,

Step 105: Keep performing a service on the serving cell when the first cell is not found, where signal strength of the serving cell is greater than a preset threshold.

Here, that the first cell is not found indicates that the first cell is not a true cell. In this case, that the signal strength of the serving cell is greater than the preset threshold indicates that the signal of the serving cell is not poor. To avoid a waste of resources and energy consumption of the electronic device due to the fact that the electronic device keeps searching for the first cell, the electronic device continues to execute the service on the serving cell. In this way, the communication quality can be ensured, and the user communication experience can be enhanced.

Optionally, the measurement report includes a cell identifier of a third cell satisfying the reporting condition of the target event, and the frequency point information includes a frequency point corresponding to the third cell, or the frequency point information includes frequency points corresponding to all inter-system cells associated with the inter-system measurement.

Here, one or more third cells are provided. This is specifically determined based on an actual situation. When the frequency point information includes the frequency point corresponding to the third cell, and search efficiency of the electronic device is high. The frequency point information includes the frequency points corresponding to all the inter-system cells associated with the inter-system measurement, so that the electronic device has a wide search range, and accuracy of determining a cell to be handed over to is further enhanced.

Optionally, the measurement report includes a cell identifier of a fourth cell, and the frequency point information includes a frequency point corresponding to the fourth cell, where the fourth cell is a cell having maximum signal strength in at least two cells satisfying the reporting condition of the target event.

Here, when the frequency point information includes the frequency point corresponding to the fourth cell, and the search efficiency of the electronic device can be further enhanced.

In an optional embodiment, step 104 of determining the second cell based on the frequency point information includes:
Step 1041a: Search for a frequency point in the frequency point information, and perform measurement on a cell corresponding to a found frequency point, to obtain a second measurement result.

Here, the second measurement result includes one or more measurement results. It should be understood that searching for a frequency point in the frequency point information refers to searching for a frequency point within a given range corresponding to the frequency point information.

Step 1042a: Select a cell having maximum signal strength from the second measurement result as the second cell.

In another optional embodiment, step 104 of determining the second cell based on the frequency point information and the frequency point corresponding to the first cell includes:

Step 1041b: Search for a frequency point in the frequency point information and the frequency point corresponding to the first cell, and perform measurement on cells corresponding to found frequency points, to obtain a third measurement result.

Here, the third measurement result includes one or more measurement results. It should be understood that searching for a frequency point in the frequency point information and the frequency point corresponding to the first cell refers to searching for the frequency points within a range jointly defined by the frequency point information and the frequency point of the first cell.

Step 1042b: Select a cell having maximum signal strength from the third measurement result as the second cell.

A specific implementation process of the cell handover control method of this application is described below by using the following examples.

### Example 1

1) After an electronic device is camped on a 5G serving cell, a network device configures an A1 measurement event and an A2 measurement event for the electronic device.
2) When the electronic device moves to an edge of the 5G cell, if the electronic device detects that a signal of the serving cell is less than an A2 reporting threshold, the electronic device reports the A2 measurement event.
3) The network device configures a B measurement event for the electronic device.
4) The electronic device performs measurement on a 4G cell, and evaluates, based on a measurement result, whether the B measurement event is satisfied. If the B measurement event is satisfied, the electronic device reports a measurement report corresponding to the B measurement event, and a 4G RRC layer of the electronic device records, into a cached frequency point list, a frequency point corresponding to the cell carried in the measurement report.
5) In an abnormal network, a fault may occur during handover of the network device, and the network device may instruct, by using a blind handover instruction, the electronic device to be handed over to a cell A corresponding to a non-B measurement event. When cell A does not truly exist, the electronic device may not find cell A. Later, the electronic device continues to search a frequency point in the cached frequency point list and search for a frequency point corresponding to cell A, and selects a 4G cell having a best signal.

### Example 2

1) After an electronic device is camped on a 5G serving cell, a network device configures an A1 measurement event and an A2 measurement event for the electronic device.
2) When the electronic device moves to an edge of the 5G cell, if the electronic device detects that a signal of the serving cell is less than an A2 reporting threshold, the electronic device reports the A2 measurement event.
3) The network device configures a B measurement event for the electronic device.
4) The electronic device performs measurement on a 4G cell, and evaluates, based on a measurement result, whether the B measurement event is satisfied. If the B measurement event is satisfied, the electronic device reports a measurement report corresponding to the B measurement event, and a 4G RRC layer of the electronic device records all measurement frequency points into a cached frequency point list.
5) In an abnormal network, a fault may occur during handover of the network device, and the network device may instruct, by using a blind handover instruction, the electronic device to be handed over to a cell A corresponding to a non-B measurement event. When cell A does not truly exist, the electronic device may not find cell A. Later, the electronic device continues to search a frequency point in the cached frequency point list and search for a frequency point corresponding to cell A, and selects a 4G cell having a best signal.

### Example 3

1) After an electronic device is camped on a 5G serving cell, a network device configures an A1 measurement event and an A2 measurement event for the electronic device.
2) When the electronic device moves to an edge of the 5G cell, if the electronic device detects that a signal of the serving cell is less than an A2 reporting threshold, the electronic device reports the A2 measurement event.
3) The network device configures a B measurement event for the electronic device.
4) The electronic device performs measurement on a 4G cell, and evaluates, based on a measurement result, whether the B measurement event is satisfied. If a plurality of 4G cells all satisfy the B measurement event, the electronic device selects and reports a 4G cell B with a best signal, and a 4G RRC layer of the electronic device records a frequency point corresponding to cell B into a cached frequency point list.
5) In an abnormal network, a fault may occur during handover of the network device, and the network device may instruct, by using a blind handover instruction, the electronic device to be handed over to a cell A corresponding to a non-B measurement event. When cell A does not truly exist, the electronic device may not find cell A. Later, the electronic device continues to search for a frequency point in the cached frequency point list and search for a frequency point corresponding to cell A, and selects a 4G cell having a best signal.

### Example 4

1) After an electronic device is camped on a 5G serving cell, a network device configures an A1 measurement event and an A2 measurement event for the electronic device.
2) When the electronic device moves to an edge of the 5G cell, if the electronic device detects that a signal of the serving cell is less than an A2 reporting threshold, the electronic device reports the A2 measurement event.
3) The network device configures a B measurement event for the electronic device.
4) The electronic device performs measurement on a 4G cell, and evaluates, based on a measurement result, whether the B measurement event is satisfied. If a plurality of 4G cells all satisfy the B measurement event, the electronic device selects, based on a local threshold configuration and a threshold corresponding to the B measurement event, a 4G cell C that satisfies the local threshold and the threshold corresponding to the B measurement event, and reports cell C, and a 4G RRC layer of the electronic device records all measurement frequency points into a cached frequency point list.
5) In an abnormal network, a fault may occur during handover of the network device, and the network device may instruct, by using a blind handover instruction, the electronic device to be handed over to a cell A corresponding to a non-B measurement event. When cell A does not truly exist, the electronic device may not find cell A. Later, the electronic device continues to search for a frequency point in the cached frequency point list and search for a frequency point corresponding to cell A, and selects a 4G cell having a best signal.

In an optional embodiment, before step 105 of keeping performing the service on the serving cell, the method of this application may further include:
Step 1051: Notify, by a first radio resource control (RRC) layer inside the electronic device, a second RRC layer of a cell handover failure, where the first RRC layer is an RRC layer supporting a first system, the second RRC layer is an RRC layer supporting a second system, the serving cell belongs to the first system, and the inter-system cell belongs to the second system.
Step 1052: Determine the signal strength of the serving cell by performing measurement on the serving cell.

Later, when the signal strength of the serving cell is greater than the preset threshold, RRC re-establishment is performed, and the service is kept being executed on the serving cell.

Subsequently, the electronic device remains in the serving cell. If the network device instructs, by using the blind handover instruction again, the electronic device to be handed over to a cell corresponding to a non-B measurement event, the electronic device repeats 105.

Further, the method of this application may further include:
recording the first cell in a first list, namely, recording a cell that does not truly exist in a list;
determining, when a second handover request message transmitted by the network device is received, a target cell to be handed over to based on the second handover request message; and
keeping, when the first list includes the target cell, performing the service on the serving cell.

It should be noted that if the first list includes the target cell, it indicates that the target cell is not a true cell and the electronic device may ignore the handover, does not need to perform searching, and continues to execute the service on the serving cell.

### Example 5

1) After an electronic device is camped on a 5G serving cell, a network device configures an A1 measurement event and an A2 measurement event for the electronic device.
2) When the electronic device moves to an edge of the 5G cell, if the electronic device detects that a signal of the serving cell is less than an A2 reporting threshold, the electronic device reports the A2 measurement event.
3) The network device configures a B measurement event for the electronic device.
4) The electronic device performs measurement on a 4G cell, and evaluates, based on a measurement result, whether the B measurement event is satisfied. If the B measurement event is satisfied, the electronic device reports a measurement report corresponding to the B measurement event, and the measurement report includes a 4G cell satisfying the B measurement event.
5) In an abnormal network, a fault may occur during handover of the network device, and the network device instructs, by using a blind handover instruction, the electronic device to be handed over to a cell A corresponding to a non-B measurement event. When cell A does not truly exist, the electronic device cannot find cell A. Later, a 4G RRC layer of the electronic device notifies a 5G RRC layer of a cell handover failure, and at the same time, records cell A into a first list. The 5G RRC layer determines, based on signal strength of the serving cell, whether the serving cell can continue a service. If the signal strength of the serving cell is greater than a preset threshold, the serving cell continues the service, RRC re-establishment is performed, and the service is kept being executed on 5G.
6) Subsequently, the electronic device remains in the serving cell. If the network device instructs, by using the blind handover instruction again, the electronic device to be handed over to the cell A corresponding to the non-B measurement event, the electronic device determines that the cell A is in a nonexistent cell list and may ignore the handover and continue to execute the service on the serving cell.

### Example 6

1) After an electronic device is camped on a 5G serving cell, a network device configures an A1 measurement event and an A2 measurement event for the electronic device.
2) When the electronic device moves to an edge of the 5G cell, if the electronic device detects that a signal of the serving cell is less than an A2 reporting threshold, the electronic device reports the A2 measurement event.
3) The network device configures a B measurement event for the electronic device.
4) The electronic device performs measurement on a 4G cell, and evaluates, based on a measurement result, whether the B measurement event is satisfied. If the B measurement event is satisfied, the electronic device reports a measurement report corresponding to the B measurement event, and the measurement report includes a 4G cell satisfying the B measurement event.
5) In an abnormal network, a fault may occur during handover of the network device, and the network device instructs, by using a blind handover instruction, the electronic device to be handed over to a cell A corresponding to a non-B measurement event. When cell A does not truly exist, the electronic device cannot find cell A. Later, a 4G RRC layer of the electronic device notifies a 5G RRC layer of a cell handover failure. The 5G RRC layer determines, based on signal strength of the serving cell, whether the serving cell can continue a service. If the signal strength of the serving cell is greater than a preset threshold, the serving cell continues the service, RRC re-establishment is performed, and the service is kept being executed on 5G.
6) Subsequently, the electronic device remains in the serving cell. If the network device instructs, by using the blind handover instruction again, the electronic device to be handed over to the cell A corresponding to the non-B measurement event, the electronic device repeats the operation of step 5.

### Example 7

1) After an electronic device is camped on a 5G serving cell, a network device configures an A1 measurement event and an A2 measurement event for the electronic device.
2) When the electronic device moves to an edge of the 5G cell, if the electronic device detects that a signal of the serving cell is less than an A2 reporting threshold, the electronic device reports the A2 measurement event.
3) The network device configures a B measurement event for the electronic device.
4) The electronic device performs measurement on a 4G cell, and evaluates, based on a measurement result, whether the B measurement event is satisfied. If the B measurement event is satisfied, the electronic device reports a measurement report corresponding to the B measurement event, and the measurement report includes a 4G cell satisfying the B measurement event.
5) In an abnormal network, a fault may occur during handover of the network device, and the network device instructs, by using a blind handover instruction, the electronic device to be handed over to a cell A corresponding to a non-B measurement event. When cell A does not truly exist, the electronic device cannot find cell A. Later, a 4G RRC layer of the electronic device notifies a 5G RRC layer of a cell handover failure, and at the same time, records cell A into a first list. The 5G RRC layer determines, based on signal strength of the serving cell, whether the serving cell can continue a service. If the signal strength of the serving cell is greater than a preset threshold, the serving cell continues the service, RRC re-establishment is performed, and the service is kept being executed on 5G.
6) Subsequently, the electronic device remains in the serving cell. If the network device instructs, by using the blind handover instruction again, the electronic device to be handed over to the cell A corresponding to the non-B measurement event, the electronic device determines that the cell A is in the first list and may ignore the handover and continue to execute the service on the serving cell.

It should be noted that the method of this application is not limited to be applied to a scenario in which 5G is handed over to 4G, and may be applied to scenarios in which 4G is handed over to 5G and 4G is handed over to 3G, and various scenarios such as 6G and 7G that may appear in the future. Details are not described herein again.

According to the cell handover control method of the embodiments of this application, when inter-system measurement is started, an inter-system cell adjacent to a serving cell is measured; when an obtained first measurement result satisfies a reporting condition of a target event, a measurement report corresponding to the target event is reported to a network device, and frequency point information is obtained, where the serving cell is a cell on which an electronic device is currently camped, the target event is an inter-system handover trigger event, and the frequency point information includes frequency points corresponding to at least part of inter-system cells associated with the inter-system measurement; and later, the network device informs the electronic device to hand over to a cell different from a cell corresponding to the target event. In one aspect, a second cell with a best or suitable signal is determined based on the frequency point information or the frequency point information and a frequency point corresponding to the first cell when the first cell is not found, and the second cell is handed over to. In another aspect, a service is kept being executed on the serving cell when the first cell is not found, where signal strength of the serving cell is greater than a preset threshold. In this way, communication quality can be ensured, and a user communication experience can be enhanced.

An executive entity of the cell handover control method provided in this embodiment of this application may be a cell handover control apparatus. In an embodiment of this application, an example in which the cell handover control apparatus performs the cell handover control method is used to describe the cell handover control apparatus provided in this embodiment of this application.

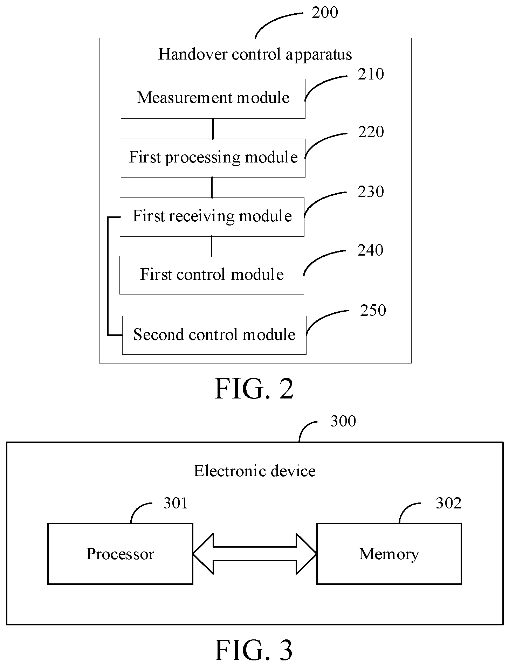

As shown in FIG. 2, an embodiment of this application further provides a cell handover control apparatus. The apparatus 200 may specifically include:
a measurement module 210 configured to perform, when inter-system measurement is started, measurement on an inter-system cell adjacent to a serving cell to obtain a first measurement result, where the serving cell is a cell on which an electronic device is currently camped;
a first processing module 220 configured to report, when the first measurement result satisfies a reporting condition of a target event, a measurement report corresponding to the target event to a network device, and obtain frequency point information, where the target event is an inter-system handover trigger event, and the frequency point information includes frequency points corresponding to at least part of inter-system cells associated with the inter-system measurement;
a first receiving module 230 configured to receive a first handover request message transmitted by the network device, where the first handover request message includes a target cell identifier, and a first cell corresponding to the target cell identifier is different from a cell corresponding to the target event; and
a first control module 240 configured to: determine a second cell based on the frequency point information, or the frequency point information and a frequency point corresponding to the first cell when the first cell is not found, and hand over to the second cell; or
a second control module 250 configured to keep performing a service on the serving cell when the first cell is not found, where signal strength of the serving cell is greater than a preset threshold.

Optionally, the measurement report includes a cell identifier of a third cell satisfying the reporting condition of the target event, and the frequency point information includes a frequency point corresponding to the third cell, or the frequency point information includes frequency points corresponding to all inter-system cells associated with the inter-system measurement.

Optionally, the measurement report includes a cell identifier of a fourth cell, and the frequency point information includes a frequency point corresponding to the fourth cell, where the fourth cell is a cell having maximum signal strength in at least two cells satisfying the reporting condition of the target event.

Optionally, the first control module 240 includes:
a first processing unit configured to: search for a frequency point in the frequency point information, and perform measurement on a cell corresponding to a found frequency point, to obtain a second measurement result; and
a second processing unit configured to select a cell having maximum signal strength from the second measurement result as the second cell.

Optionally, the first control module 240 includes:
a third processing unit configured to: search for a frequency point in the frequency point information and the frequency point corresponding to the first cell, and perform measurement on cells corresponding to found frequency points, to obtain a third measurement result; and
a fourth processing unit configured to select a cell having maximum signal strength from the third measurement result as the second cell.

Optionally, the apparatus further includes:
a second processing module configured to notify, by a first radio resource control (RRC) layer inside the electronic device, a second RRC layer of a cell handover failure, where the first RRC layer is an RRC layer supporting a first system, the second RRC layer is an RRC layer supporting a second system, the serving cell belongs to the first system, and the inter-system cell belongs to the second system; and
a third processing module configured to determine the signal strength of the serving cell by performing measurement on the serving cell.

Optionally, the apparatus further includes:
a recording module configured to record the first cell in a first list;
a fourth processing module configured to determine, when a second handover request message transmitted by the network device is received, a target cell to be handed over to based on the second handover request message; and
a fifth processing module configured to keep, when the first list includes the target cell, performing the service on the serving cell.

According to the cell handover control apparatus of the embodiments of this application, when inter-system measurement is started, an inter-system cell adjacent to a serving cell is measured; when an obtained first measurement result satisfies a reporting condition of a target event, a measurement report corresponding to the target event is reported to a network device, and frequency point information is obtained, where the target event is an inter-system handover trigger event, and the frequency point information includes frequency points corresponding to at least part of inter-system cells performing the inter-system measurement; and later, the network device informs the electronic device to hand over to a cell different from a cell corresponding to the target event. In one aspect, a second cell with a best or suitable signal is determined based on the frequency point information or the frequency point information and a frequency point corresponding to the first cell when the first cell is not found, and the second cell is handed over to. In another aspect, a service is kept being executed on the serving cell when the first cell is not found, where signal strength of the serving cell is greater than a preset threshold. In this way, communication quality can be ensured, and a user communication experience can be enhanced.

The cell handover control apparatus in this embodiment of this application may be an electronic device, or may be a component, for example, an integrated circuit or a chip, in an electronic device. For example, the electronic device may be a mobile phone, a tablet computer, a notebook computer, a palmtop computer, an in-vehicle electronic device, a mobile Internet device (Mobile Internet Device, MID), an augmented reality (augmented reality, AR)/virtual reality (virtual reality, VR) device, a robot, a wearable device, and the like. It is not specifically limited in this embodiment of this application.

The cell handover control apparatus in this embodiment of this application may be an apparatus with an operating system. The operating system may be an Android (Android) operating system, or may be an IOS operating system, or may be another possible operating system. It is not specifically limited in the embodiments of this application.

The cell handover control apparatus provided in this embodiment of this application can implement all processes implemented by the method embodiments shown in FIG. 1, and details are not described herein again to avoid repetition.

Optionally, as shown in FIG. 3, an embodiment of this application further provides an electronic device 300, including a processor 301 and a memory 302. The memory 302 stores a program or an instruction executable on the processor 301, and the program or the instruction, when executed by the processor 301, implements the steps of the above cell handover control method embodiments, and the same technical effects can be achieved. To avoid repetition, details are not described herein again.

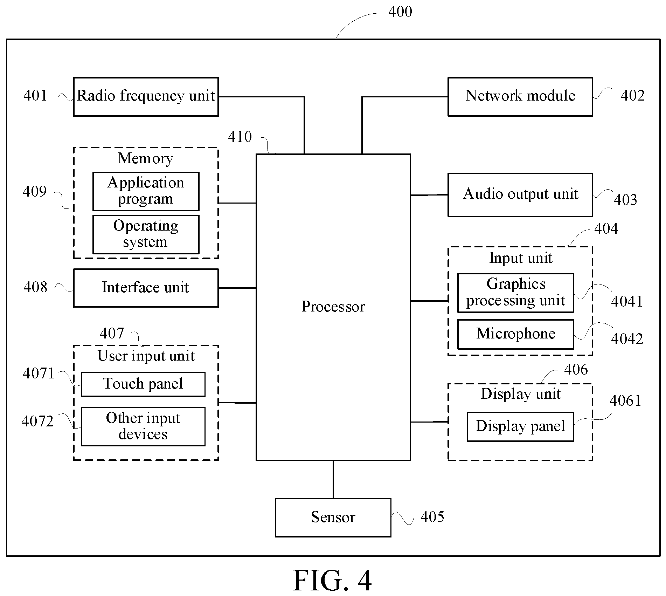

FIG. 4 is a diagram of a hardware structure of an electronic device for implementing the embodiments of this application.

The electronic device 400 includes, but is not limited to, components such as a radio frequency unit 401, a network module 402, an audio output unit 403, an input unit 404, a sensor 405, a display unit 406, a user input unit 407, an interface unit 408, a memory 09, and a processor 410.

A person skilled in the art may understand that the electronic device 400 may further include a power supply (such as a battery) for supplying power to the components. The power supply may be logically connected to the processor 410 by using a power management system, thereby implementing functions such as charging, discharging, and power consumption management by using the power management system. The structure of the electronic device shown in FIG. 4 constitutes no limitation on the electronic device, and the electronic device may include more or fewer components than those shown in the figure, or some components may be combined, or a different component deployment may be used, which are not described herein again.

The processor 410 is configured to perform, when inter-system measurement is started, measurement on an inter-system cell adjacent to a serving cell to obtain a first measurement result, where the serving cell is a cell on which an electronic device is currently camped.

When the first measurement result satisfies a reporting condition of a target event, the radio frequency unit 401 is configured to report a measurement report corresponding to the target event to a network device. The processor 410 is further configured to obtain frequency point information, where the target event is an inter-system handover trigger event, and the frequency point information includes frequency points corresponding to at least part of inter-system cells associated with the inter-system measurement.

The radio frequency unit 401 is further configured to receive a first handover request message transmitted by the network device, where the first handover request message includes a target cell identifier, and a first cell corresponding to the target cell identifier is different from a cell corresponding to the target event.

The processor 410 is further configured to:
determine a second cell based on the frequency point information, or the frequency point information and a frequency point corresponding to the first cell when the first cell is not found, and hand over to the second cell; or
keep performing a service on the serving cell when the first cell is not found, where signal strength of the serving cell is greater than a preset threshold.

According to the electronic device of this embodiment of this application, communication quality can be ensured, and a user communication experience can be enhanced.

It should be understood that in the embodiments of this application, the input unit 404 may include a graphics processing unit (Graphics Processing Unit, GPU) 4041 and a microphone 4042, and the GPU 4041 processes image data of static pictures or videos obtained by an image capturing apparatus (such as a camera) in a video capturing mode or an image capturing mode. The display unit 406 may include a display panel 4061. The display panel 4061 may be configured by using a liquid crystal display, an organic light-emitting diode, or the like. The user input unit 407 includes at least one of a touch panel 4071 and another input device 4072. The touch panel 4071 is also referred to as a touchscreen. The touch panel 4071 may include two parts: a touch detection apparatus and a touch controller. The another input device 4072 may include, but is not limited to, a physical keyboard, a functional key (such as a volume control key or a switch key), a track ball, a mouse, and a joystick. Details are not described herein again.

The memory 409 may be configured to store a software program and various data. The memory 409 may mainly include a first storage region storing the program or an instruction and a second storage region storing the data. The first storage region may store an operating system, an application program or an instruction required by at least one function (for example, a sound playback function and an image display function), and the like. Besides, the memory 409 may include a volatile memory or a non-volatile memory, or may include both the volatile memory and the non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 409 in the embodiments of this application includes, but is not limited to, these memories and any other memory of a suitable type.

The processor 410 may include one or more processing units. Optionally, the processor 410 integrates an application processor and a modem processor. The application processor mainly processes operations related to an operating system, a user interface, an application, and the like. The modem processor mainly processes wireless communication signals, and is, for example, a baseband processor. It may be understood that the foregoing modem may not be integrated into the processor 410.

Optionally, the measurement report includes a cell identifier of a third cell satisfying the reporting condition of the target event, and the frequency point information includes a frequency point corresponding to the third cell, or the frequency point information includes frequency points corresponding to all inter-system cells associated with the inter-system measurement.

Optionally, the measurement report includes a cell identifier of a fourth cell, and the frequency point information includes a frequency point corresponding to the fourth cell, where the fourth cell is a cell having maximum signal strength in at least two cells satisfying the reporting condition of the target event.

Optionally, the processor 410 is further configured to:
search for a frequency point in the frequency point information, and perform measurement on a cell corresponding to a found frequency point, to obtain a second measurement result; and
select a cell having maximum signal strength from the second measurement result as the second cell.

Optionally, the processor 410 is further configured to:
search for a frequency point in the frequency point information and the frequency point corresponding to the first cell, and perform measurement on cells corresponding to found frequency points, to obtain a third measurement result; and
select a cell having maximum signal strength from the third measurement result as the second cell.

Optionally, the processor 410 is further configured to:
notify, by a first radio resource control (RRC) layer inside the electronic device, a second RRC layer of a cell handover failure, where the first RRC layer is an RRC layer supporting a first system, the second RRC layer is an RRC layer supporting a second system, the serving cell belongs to the first system, and the inter-system cell belongs to the second system; and
determine the signal strength of the serving cell by performing measurement on the serving cell.

Optionally, the processor 410 is further configured to:
record the first cell in a first list;
determine, when a second handover request message transmitted by the network device is received, a target cell to be handed over to based on the second handover request message; and
keep, when the first list includes the target cell, performing the service on the serving cell.

An embodiment of this application further provides a readable storage medium, having a program or an instruction stored therein. The program or the instruction, when executed by a processor, implements the processes of the above cell handover control method embodiments, and the same technical effects can be achieved. Details are not described herein again to avoid repetition.

The processor is the processor in the electronic device in the above embodiment. The readable storage medium includes a computer-readable storage medium, such as a computer read-only memory ROM, a random access memory RAM, a magnetic disk, or an optical disk.

An embodiment of this application additionally provides a chip. The chip includes a processor and a communication interface. The communication interface is coupled to the processor, and the processor is configured to run a program or an instruction to implement the processes of the above cell handover control method embodiments, and the same technical effects can be achieved. Details are not described herein again to avoid repetition.

It should be understood that the chip provided in this embodiment of this application may alternatively be referred to as a system-level chip, a system chip, a chip system, a system on chip, or the like.

An embodiment of this application provides a computer program product. The program product is stored in a storage medium, and the program product is executed by at least one processor to implement the processes of the above cell handover control method embodiments, and the same technical effects can be achieved. Details are not described herein again to avoid repetition.

It should be noted that in this specification, the term "include", "comprise", or any other variants thereof are intended to encompass in a non-exclusive mode, so that a process, a method, an object, or an apparatus including a series of elements not only includes those elements, but also includes other elements that are not explicitly listed, or elements that are inherent to such a process, a method, an object, or an apparatus. Without more limitations, an element defined by a sentence "including one......" does not exclude existence of other same elements in the process, the method, the object, or the apparatus that includes the element. In addition, it should be noted that the scopes of the methods and apparatus in the implementations of this application are not limited to executing functions in the order shown or discussed, but may alternatively include executing functions in a substantially simultaneous manner or in an opposite order according to the functions involved. For example, the methods described may be executed in a different order than that described, and steps may alternatively be added, omitted, or combined. In addition, features described with reference to some examples may be combined in other examples.

According to the descriptions in the foregoing implementations, a person skilled in the art may clearly learn that the method according to the foregoing embodiment may be implemented by relying on software and an essential commodity hardware platform or by using hardware, but the former is a better implementation in most cases. Based on such an understanding, the technical solutions of this application essentially or the part contributing to the related art may be implemented in a form of a computer software product. The computer software product is stored in a storage medium (such as a ROM/RAM, a magnetic disk, or an optical disc) and includes several instructions for instructing an electronic device (which may be a mobile phone, a computer, a server, a network device, or the like) to perform the methods described in the embodiments of this application.

The embodiments of this application are described above with reference to the accompanying drawings. However, this application is not limited to the specific implementations described above, and the specific implementations described above are only exemplary and not limitative. A person of ordinary skill in the art may make various variations under the teaching of this application without departing from the spirit of this application and the protection scope of the claims, and such variations shall all fall within the protection scope of this application.

## Claims

1. A cell handover control method, applied to an electronic device and comprising:
performing, when inter-system measurement is started, measurement on an inter-system cell adjacent to a serving cell to obtain a first measurement result, wherein the serving cell is a cell on which the electronic device is currently camped;
reporting, when the first measurement result satisfies a reporting condition of a target event, a measurement report corresponding to the target event to a network device, and obtaining frequency point information, wherein the target event is an inter-system handover trigger event, and the frequency point information comprises frequency points corresponding to at least part of inter-system cells associated with the inter-system measurement;
receiving a first handover request message transmitted by the network device, wherein the first handover request message comprises a target cell identifier, and a first cell corresponding to the target cell identifier is different from a cell corresponding to the target event; and
determining a second cell based on the frequency point information, or the frequency point information and a frequency point corresponding to the first cell when the first cell is not found, and handing over to the second cell; or
keeping performing a service on the serving cell when the first cell is not found, wherein signal strength of the serving cell is greater than a preset threshold.

2. The method according to claim 1, wherein the measurement report comprises a cell identifier of a third cell satisfying the reporting condition of the target event, and the frequency point information comprises a frequency point corresponding to the third cell, or the frequency point information comprises frequency points corresponding to all inter-system cells associated with the inter-system measurement.

3. The method according to claim 1, wherein the measurement report comprises a cell identifier of a fourth cell, and the frequency point information comprises a frequency point corresponding to the fourth cell, wherein the fourth cell is a cell having maximum signal strength in at least two cells satisfying the reporting condition of the target event.

4. The method according to claim 1, wherein the determining the second cell based on the frequency point information comprises:
searching for a frequency point in the frequency point information, and performing measurement on a cell corresponding to a found frequency point, to obtain a second measurement result; and
selecting a cell having maximum signal strength from the second measurement result as the second cell.

5. The method according to claim 1, wherein the determining the second cell based on the frequency point information and the frequency point corresponding to the first cell comprises:
searching for a frequency point in the frequency point information and the frequency point corresponding to the first cell, and performing measurement on cells corresponding to found frequency points, to obtain a third measurement result; and
selecting a cell having maximum signal strength from the third measurement result as the second cell.

6. The method according to claim 1, wherein before the keeping performing the service on the serving cell, the method further comprises:
notifying, by a first radio resource control RRC layer inside the electronic device, a second RRC layer of a cell handover failure, wherein the first RRC layer is an RRC layer supporting a first system, the second RRC layer is an RRC layer supporting a second system, the serving cell belongs to the first system, and the inter-system cell belongs to the second system; and
determining the signal strength of the serving cell by performing measurement on the serving cell.

7. The method according to claim 1, wherein the method further comprises:
recording the first cell in a first list;
determining, when a second handover request message transmitted by the network device is received, a target cell to be handed over to based on the second handover request message; and
keeping, when the first list comprises the target cell, performing the service on the serving cell.

8. A cell handover control apparatus, comprising:
a measurement module configured to perform, when inter-system measurement is started, measurement on an inter-system cell adjacent to a serving cell to obtain a first measurement result, wherein the serving cell is a cell on which an electronic device is currently camped;
a first processing module configured to report, when the first measurement result satisfies a reporting condition of a target event, a measurement report corresponding to the target event to a network device, and obtain frequency point information, wherein the target event is an inter-system handover trigger event, and the frequency point information comprises frequency points corresponding to at least part of inter-system cells associated with the inter-system measurement;
a first receiving module configured to receive a first handover request message transmitted by the network device, wherein the first handover request message comprises a target cell identifier, and a first cell corresponding to the target cell identifier is different from a cell corresponding to the target event; and
a first control module configured to: determine a second cell based on the frequency point information, or the frequency point information and a frequency point corresponding to the first cell when the first cell is not found, and hand over to the second cell; or
a second control module configured to keep performing a service on the serving cell when the first cell is not found, wherein signal strength of the serving cell is greater than a preset threshold.

9. The apparatus according to claim 8, wherein the measurement report comprises a cell identifier of a third cell satisfying the reporting condition of the target event, and the frequency point information comprises a frequency point corresponding to the third cell, or the frequency point information comprises frequency points corresponding to all inter-system cells associated with the inter-system measurement.

10. The apparatus according to claim 8, wherein the measurement report comprises a cell identifier of a fourth cell, and the frequency point information comprises a frequency point corresponding to the fourth cell, wherein the fourth cell is a cell having maximum signal strength in at least two cells satisfying the reporting condition of the target event.

11. The apparatus according to claim 8, wherein the first control module comprises:
a first processing unit configured to: search for a frequency point in the frequency point information, and perform measurement on a cell corresponding to a found frequency point, to obtain a second measurement result; and
a second processing unit configured to select a cell having maximum signal strength from the second measurement result as the second cell.

12. The apparatus according to claim 8, wherein the first control module comprises:
a third processing unit configured to: search for a frequency point in the frequency point information and the frequency point corresponding to the first cell, and perform measurement on cells corresponding to found frequency points, to obtain a third measurement result; and
a fourth processing unit configured to select a cell having maximum signal strength from the third measurement result as the second cell.

13. The apparatus according to claim 8, wherein the apparatus further comprises:
a second processing module configured to notify, by a first radio resource control RRC layer inside the electronic device, a second RRC layer of a cell handover failure, wherein the first RRC layer is an RRC layer supporting a first system, the second RRC layer is an RRC layer supporting a second system, the serving cell belongs to the first system, and the inter-system cell belongs to the second system; and
a third processing module configured to determine the signal strength of the serving cell by performing measurement on the serving cell.

14. The apparatus according to claim 8, wherein the apparatus further comprises:
a recording module configured to record the first cell in a first list;
a fourth processing module configured to determine, when a second handover request message transmitted by the network device is received, a target cell to be handed over to based on the second handover request message; and
a fifth processing module configured to keep, when the first list comprises the target cell, performing the service on the serving cell.

15. An electronic device, comprising a processor and a memory, wherein the memory stores a program or an instruction executable on the processor, and the program or the instruction, when executed by the processor, implements the steps of the cell handover control method according to any one of claims 1 to 7.

16. A readable storage medium, having a program or an instruction stored therein, wherein the program or the instruction, when executed by a processor, implements the steps of the cell handover control method according to any one of claims 1 to 7.

17. A chip, comprising a processor and a communication interface, wherein the communication interface is coupled to the processor, and the processor is configured to run a program or an instruction to implement the steps of the cell handover control method according to any one of claims 1 to 7.

18. A computer program product, wherein the program product is executed by at least one processor to implement the cell handover control method according to any one of claims 1 to 7.

19. An electronic device, wherein the electronic device is configured to perform the cell handover control method according to any one of claims 1 to 7.
